# EUROPEAN PATENT APPLICATION

(11) **EP 2 328 113 A2**
(43) Date of publication of application: **01.06.2011**
(21) Application number: 10190133.8
(22) Date of filing: 05.11.2010
(51) Int. Cl.: G06K 9/20, B60Q 1/14

(54) **Vehicular headlamp system**

(30) Priority: 25.11.2009 JP 2009267920
(71) Applicant: Koito Manufacturing Co., Ltd., Tokyo 108 (JP)
(72) Inventor: Yamamura, Satoshi, Shizuoka (JP); Tanaka, Hidetada, Shizuoka (JP)
(74) Representative: HOFFMANN EITLE

(57) **Abstract**

[TASK] To suitably detect a light emitting object and a reflective object ahead of a vehicle.

[MEANS OF SOLVING THE PROBLEM] A vehicular headlamp system 100 includes: a vehicular headlamp 10 that can independently irradiate each of a plurality of segmented regions that divide a light distribution region forward of an own vehicle; an irradiation control portion 44 that controls the vehicular headlamp 10 so as to repeatedly alternate between irradiating and not irradiating light to each segmented region; a camera 40 that respectively images forward of the own vehicle during irradiation and non-irradiation of the segmented region, and generates an irradiation image and a non-irradiation image; a high-luminance part detection portion 46 that detects a high-luminance part within the irradiation image and the non-irradiation image; and a light emitting object determination portion 48 that distinguishes between and detects a light emitting object and a reflective object present ahead of the vehicle by comparing whether the high-luminance part is present in both images.

## Description

### [Technical Field]

The present invention relates to a vehicular headlamp system for controlling a vehicular headlamp.

### [Related Art]

A known vehicular headlamp system detects a high-luminance part that corresponds to a headlamp or a tail lamp of an oncoming vehicle or a preceding vehicle (which are called "forward vehicles" below as appropriate) from an image imaged by a camera of forward of an own vehicle, and prevents glare for the forward vehicle by finding the direction of the light region and changing a light distribution pattern of the headlamp of the own vehicle.

In such a vehicular headlamp system, Patent Document 1 describes art that is capable of quickly determining whether the detected high-luminance part is caused by light radiated from the forward vehicle, or caused by reflected light that is light from the own vehicle's headlamp reflected off a road sign or the like. This art images an image of forward of the own vehicle when the headlamp of the own vehicle is not lit, and determines the forward vehicle based on the high-luminance part within the image. According to this art, because the image imaged by the camera of the own vehicle is an image when the headlamp of the own vehicle is not lit, the image does not have a high-luminance part caused by light radiated from the headlamp of the own vehicle that is reflected off a road sign or the like. Therefore, it is possible to quickly determine whether the high-luminance part within the image is caused by light radiated from the forward vehicle.

### [Prior Art Literature]

### [Patent Documents]

[Patent Document 1]
   Japanese Patent Application Laid-Open (Kokai) No. 2007-76429

### [Disclosure of the Invention]

### [Problem to be Solved by the Invention]

The system described in Patent Document 1 has a configuration that detects the high-luminance part within the image imaged when the headlamp of the own vehicle is not lit. Therefore, although an object that emits its own light (called a "light emitting object" below as appropriate), such as a forward vehicle, can be detected, an object that does not emit its own light (called a "reflective object" below as appropriate), such as a road sign or a delineator, cannot be detected. Acquiring information on reflective objects as well as light emitting objects is useful from the standpoints of a light distribution control and a vehicle control.

The present invention was devised in light of the foregoing circumstances, and it is an object of the present invention to provide a vehicular headlamp system that is capable of suitably detecting a light emitting object and a reflective object ahead of a vehicle. [Means for Solving the Problem]

In order to solve the above problem, a vehicular headlamp system according to an aspect of the present invention includes: a vehicular headlamp that can independently irradiate each of a plurality of segmented regions that divide a light distribution region forward of an own vehicle; irradiation control means that controls the vehicular headlamp so as to repeatedly alternate between irradiating and not irradiating light to at least one segmented region; imaging means that respectively images forward of the own vehicle during irradiation and non-irradiation of the at least one segmented region, and generates an irradiation image and a non-irradiation image; and detection means that detects a high-luminance part within the irradiation image and the non-irradiation image, and distinguishes between and detects a light emitting object and a reflective object present ahead of the vehicle by comparing whether the high-luminance part is present in both images. The detection means may determine a high-luminance part present within the non-irradiation image to be a light emitting object, and determine a high-luminance part present within the irradiation image but not within the non-irradiation image to be a reflective object.

According to this aspect, a light emitting object such as a forward vehicle and a reflective object such as a road sign or a delineator can be distinguished and suitably detected. Information on detected light emitting objects and reflective objects can be utilized for a light distribution control and a vehicle control.

The detection means may determine whether the light emitting object is a forward vehicle based on the non-irradiation image. The irradiation control means, if the detection means determines that the light emitting object is a forward vehicle, may control the vehicular headlamp so as to lower a proportion of irradiation time of light to at least one segmented region. In this case, the glare for the forward vehicle can be reduced.

The detection means may detect an irradiation suppression object to which light irradiation should be suppressed based on the irradiation image. The irradiation control means, if the detection means detects the irradiation suppression object, may control the vehicular headlamp so as to lower a proportion of irradiation time of light to at least one segmented region. In this case, the glare for a pedestrian or the like, for example, can be reduced.

The irradiation control means may control the vehicular headlamp so as to repeatedly alternate between irradiating and not irradiating light to a segmented region that is irradiated with light of a predetermined intensity or higher, and continuously irradiate light to other segmented regions. By performing such a control, it is possible to suppress lowering of an irradiation intensity of the vehicular headlamp overall.

### [Effects of the Invention]

According to the present invention, a vehicular headlamp system can be provided that is capable of suitably detecting a light emitting object and a reflective object ahead of a vehicle.

### [Brief Description of the Drawings]

[FIG. 1]

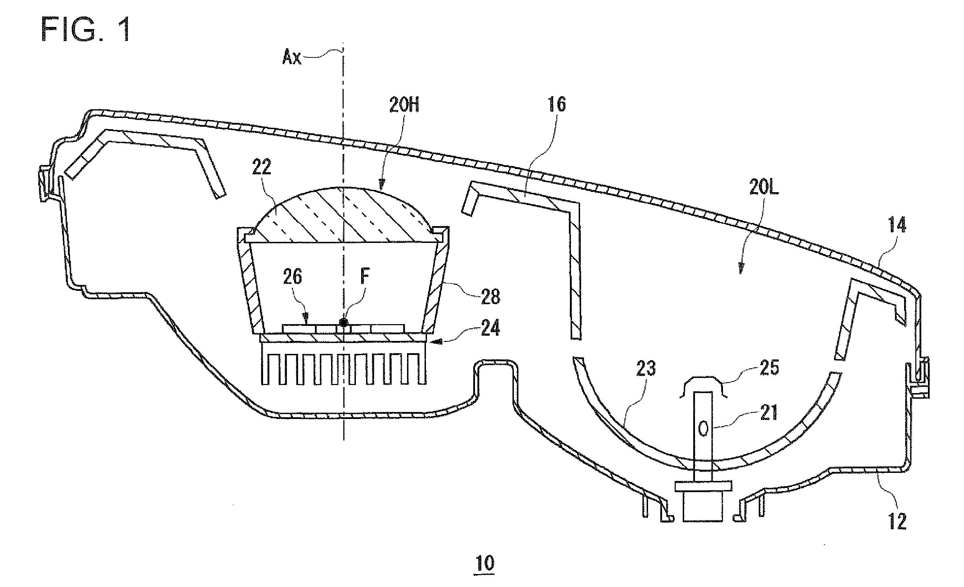

   FIG. 1 is a schematic horizontal cross-sectional view of a vehicular headlamp used in a vehicular headlamp system according to an embodiment of the present invention.
[FIG. 2]

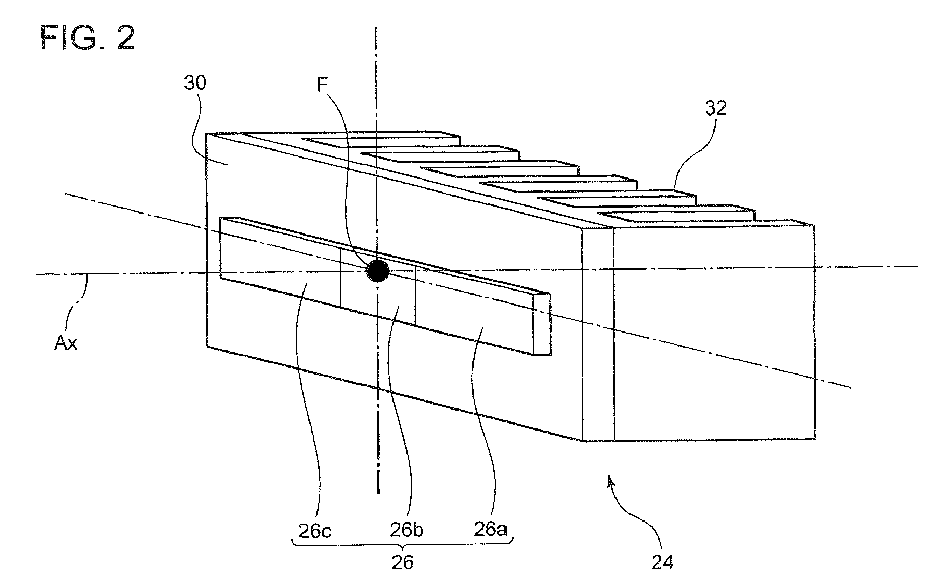

   FIG. 2 is a schematic diagram of a light source unit in a high beam lamp.
[FIG. 3]

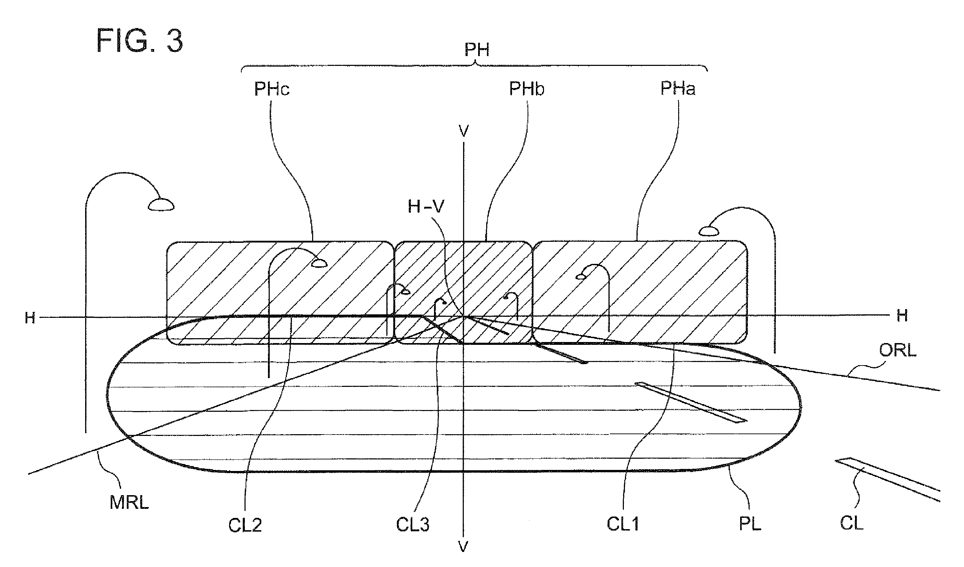

   FIG. 3 is a drawing for explaining a light distribution pattern formed by the vehicular headlamp.
[FIG. 4]

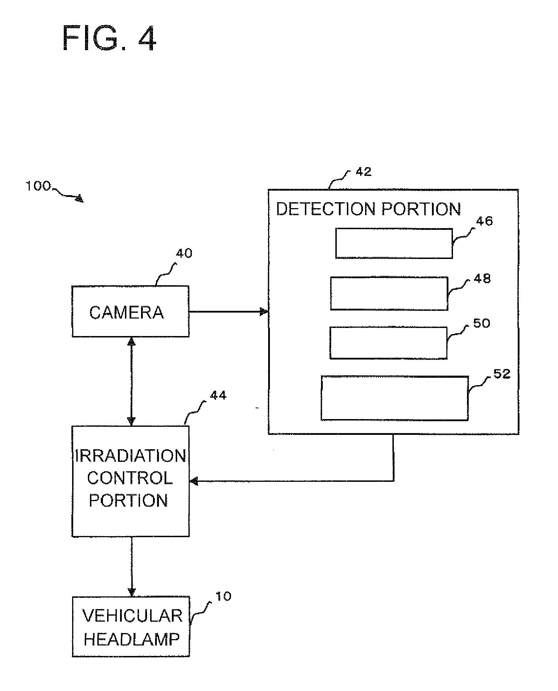

   FIG. 4 is a functional block diagram for explaining the vehicular headlamp system according to the embodiment.
[FIG. 5]

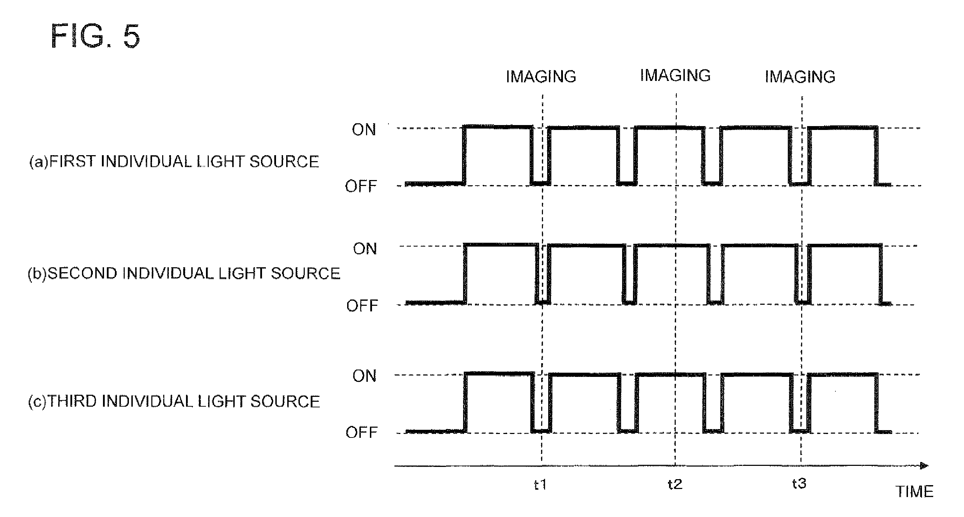

   FIGS. 5(a) to 5(c) are timing charts for explaining a lighting control of first to third individual light sources.
[FIG. 6]

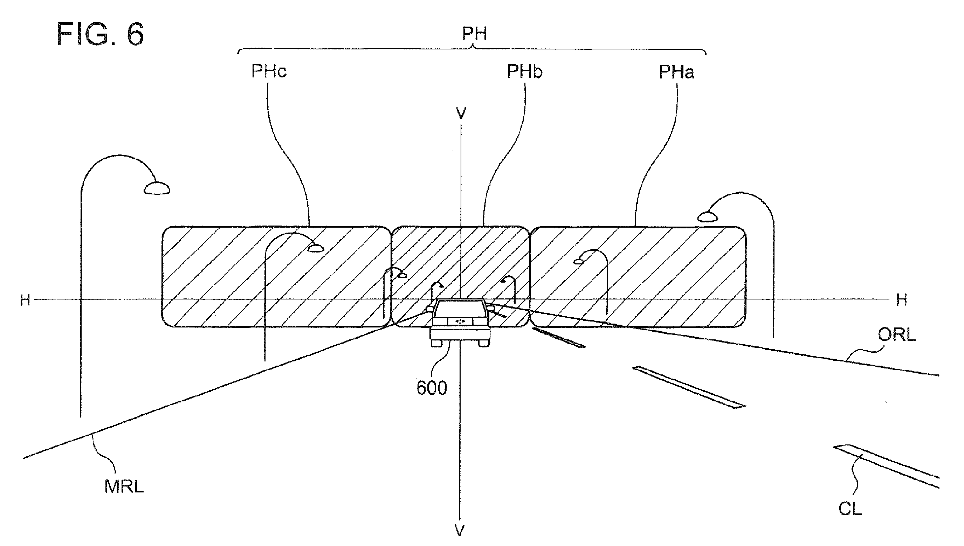

   FIG. 6 is a drawing for explaining an operation of the vehicular headlamp system.
[FIG. 7]

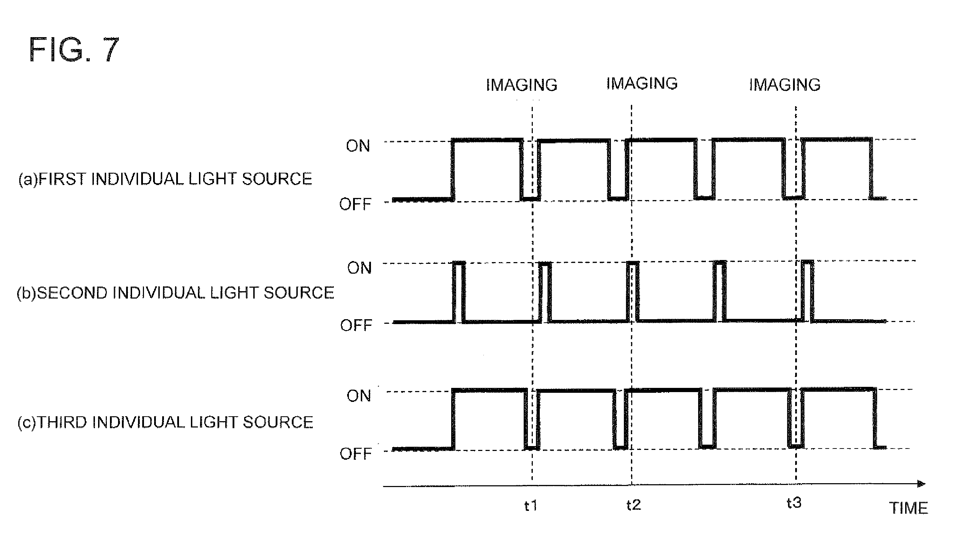

   FIGS. 7(a) to 7(c) are timing charts for explaining a control of the first to third individual light sources and a camera under the circumstances shown in FIG. 6.
[FIG. 8]

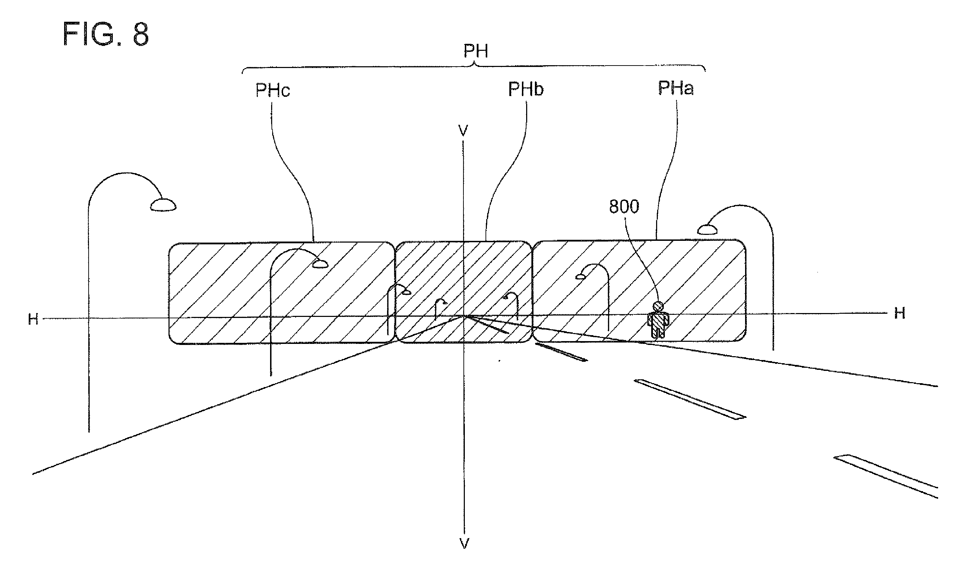

   FIG. 8 is a drawing for explaining an operation of the vehicular headlamp system.
[FIG. 9]

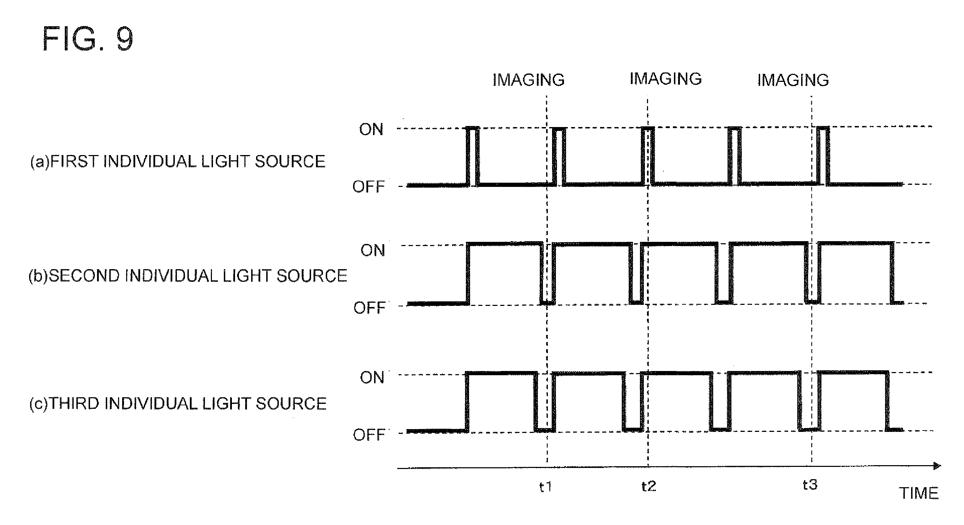

   FIGS. 9(a) to 9(c) are timing charts for explaining a control of the first to third individual light sources and the camera under the circumstances shown in FIG. 8.
[FIG. 10]

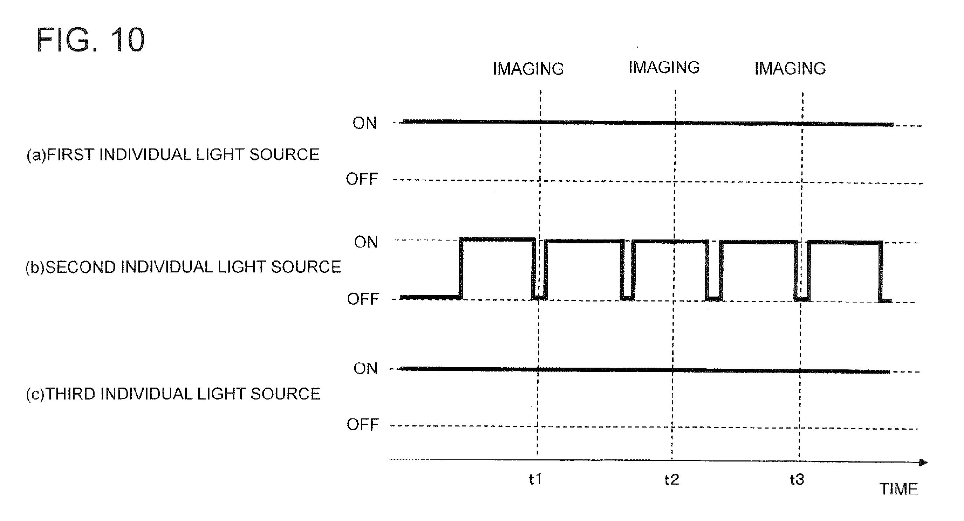

   FIG. 10 is a timing chart for explaining a control of the first to third individual light sources according to another embodiment of the present invention.

### [Best Modes for Carrying Out the Invention]

A vehicular headlamp system according to an embodiment of the present invention is a system provided with a vehicular headlamp that is capable of independently irradiating a plurality of segmented regions that divide a light distribution region forward of an own vehicle. In the present system, the vehicular headlamp is controlled so as to repeatedly alternate between irradiating and not irradiating light, and forward of the own vehicle is respectively imaged during times of light irradiation and non-irradiation. A high-luminance part is detected in an image imaged during irradiation and an image imaged during non-irradiation, and a light emitting object and a reflective object present ahead of the vehicle are distinguished and detected by comparing whether the high-luminance part is present in both images. A light emitting object is an object that emits its own light, such as a forward vehicle. A reflective object is an object that reflects light irradiated from the own vehicle, such as a road sign or a delineator (safety post). According to the present system, light emitting objects and reflective objects can be detected with high accuracy, and information on detected light emitting objects and reflected objects can be utilized in a light distribution control, a vehicle control, and the like.

Hereinafter, the present invention will be described based on preferred embodiments and with reference to the accompanying drawings. Like reference numerals are used for like or corresponding structural elements, members, and processes shown in the drawings, and duplicate descriptions are omitted as appropriate. The embodiments do not intend to limit the invention, but exemplify the invention. All of the features and the combinations thereof described in the embodiments are not necessarily essential to the invention.

FIG. 1 is a schematic horizontal cross-sectional view of a vehicular headlamp 10 used in a vehicular headlamp system according to an embodiment of the present invention.

The vehicular headlamp 10 according to the present embodiment has a configuration in which a low beam lamp 20L and a high beam lamp 20H are accommodated inside a lamp chamber, which is formed from a lamp body 12 and a translucent cover 14 that is attached to a front end opening portion of the lamp body 12. The low beam lamp 20L and the high beam lamp 20H will both be referred to as "lamps" below as appropriate. The lamps are respectively attached to the lamp body 12 by support members not shown in the drawing. An extension member 16 that has opening portions in regions where the lamps exist is fixed to the lamp body 12 or the translucent cover 14, and forwardly covers a region other than a front opening portion of the lamp body 12 and the lamp.

The low beam lamp 20L is a commonly known reflective type lamp, and has a light source bulb 21 and a reflector 23. The low beam lamp 20L reflects light radiated from the light source bulb 21 off the reflector 23, and a portion of light heading forward from the reflector 23 is cut by a shielding plate not shown in the drawing to form a low beam distribution pattern that has a predetermined cut-off line. A distal end of the light source bulb 21 is provided with a shade 25 that cuts light radiating directly forward from the light source bulb 21. Note that the low beam lamp 20L is not limited to this shape, and may be a projector type lamp similar to the high beam lamp 20H that will be described later.

The high beam lamp 20H is a projector type lamp, and has a projection lens 22, a light source unit 24 that includes a light source 26 for high beam irradiation, and a holder 28 that holds the projections lens 22 and the light source unit 24. The projection lens 22 is a plane convex aspherical lens having a convex front face and a flat rear face. The projection lens 22 is disposed on an optical axis Ax that extends in the vehicle front-back direction. The projection lens 22 is configured so as to project an image on a rear focal plane that includes a rear focal point F, thus forming an inverted image on a vertical virtual screen positioned in front of the lamp, A circumferential edge portion of the projection lens 22 is held in a front end annular groove portion of the holder 28.

The light source unit 24 is held on a rear end side of the holder 28, with the light source 26 facing forward in the direction of the optical axis Ax and disposed more rearward than the rear focal point F of the projection lens 22. In the light source unit 24, light is directly irradiated from the light source 26 to the projection lens 22. The holder 28 is attached to the lamp body 12 through a support member not shown in the drawing.

FIG. 2 is a schematic diagram of the light source unit 24 in the high beam lamp 20H.

The light source unit 24 has the light source 26, a support plate 30, and a heat dissipating plate 32. The light source 26 is a light emitting element such as a light emitting diode (LED), for example, and is fixed to a forward surface of the support plate 30 such that a light emitting surface of the light source 26 faces forward in the direction of the optical axis Ax. The light source 26 is disposed such that a center point thereof is positioned below the rear focal point F of the projection lens 22. In addition, the light source 26 is divided into three individual light sources: a first individual light source 26a, a second individual light source 26b, and a third individual light source 26c. The light emission intensity of these individual light sources can be individually controlled by an irradiation control portion 44 that will be described later. The first to third individual light sources 26a to 26c each have a generally oblong shape, and are disposed mutually adjacent in a horizontal line. Further, the first individual light source 26a and the third individual light source 26c are larger in the left-right direction than the second individual light source 26b. The second individual light source 26b is disposed on the optical axis Ax. The first individual light source 26a is disposed on the right side of the second individual light source 26b as viewed from the front, and the third individual light source 26c is disposed on the left side.

The heat dissipating plate 32 is a member for dispersing heat emitted from the light source 26, and is held on a vehicle rearward surface of the support plate 30. The light source unit 24 is fixedly provided on the holder 28 through the support plate 30.

FIG. 3 is a drawing for explaining a light distribution pattern formed by the vehicular headlamp 10. FIG. 3 is a drawing of a case in which the vehicle is traveling on a straight, paved road with two lanes (one lane in each direction). In FIG. 3, a low beam distribution pattern PL and a high beam distribution pattern PH, which are formed on a virtual vertical screen positioned 25 meters in front of the vehicle by light that is irradiated from the vehicular headlamp 10, are shown superposed on a perspective view of forward of the own vehicle. A center line CL, an own vehicle lane line MRL, and an oncoming vehicle lane line ORL are also shown in FIG. 3. The own vehicle lane line MRL extends in the bottom left direction from a point H-V, which is a vanishing point of the perspective view (an intersection point of a horizontal line H-H and a vertical line V-V). The center line CL and the oncoming vehicle lane line ORL extend in the bottom right direction from the point H-V.

The low beam distribution pattern PL is formed by light irradiated from the low beam lamp 20L. The low beam distribution pattern PL shown in FIG. 3 is a light distribution pattern designed so as not to generate glare for oncoming vehicles and pedestrians when traveling in an urban area of a region where people drive on the left side of the road. An upper end edge of the low beam distribution pattern PL has cut-off lines CL1, CL2, CL3 that are formed in a stepped fashion in the left-right direction. The cut-off line CL1 is formed more rightward than the line V-V of the vehicle headlamp 10, so as to extend in the horizontal direction as an oncoming vehicle lane cut-off line. The cut-off line CL2 is formed more leftward than the line V-V, so as to extend in the horizontal direction at a position higher than the cut-off line CL1 as an own vehicle lane cut-off line. The cut-off line CL3 is formed as a diagonal cut-off line that connects an end portion on the V-V line side of the cut-off line CL2 and an end portion of the V-V line side of the cut-off line CL1. The cut-off line CL3 extends at an inclined angle of approximately 45 degrees diagonally upward and leftward from an intersection point of the cut-off line CL1 and the line V-V.

The high beam distribution pattern PH is formed by light irradiated from the high beam lamp 20H. The high beam distribution pattern PH is formed as an addition to the low beam distribution pattern PL.

As shown in FIG. 3, the light distribution region of the high beam distribution pattern PH is divided into first to third segmented regions PHa to PHc, which have generally oblong shapes and are disposed in a horizontal line. The first segmented region PHa is formed by light irradiated from the first individual light source 26a, the second segmented region PHb is formed by light irradiated from the second individual light source 26b, and the third segmented region PHc is formed by light irradiated from the third individual light source 26c. The second segmented region PHb is disposed in a center portion of the high beam distribution pattern PH. The first segmented region PHa is disposed on the right side of the second segmented region PHb as viewed from the front of the own vehicle, and the third segmented region PHc is disposed on the left side. The second segmented region mainly covers a distant region of the own vehicle lane and the oncoming vehicle lane that includes the point H-V, the first segmented region PHa mainly covers a distant region more outward than the oncoming vehicle lane, and the third segmented region PHc mainly covers a distant region more outward than the own vehicle lane. During irradiation of the low beam distribution pattern PL, adjusting the irradiation intensity of and selectively adding the first to third segmented regions PHa to PHc to the low beam distribution pattern PL enables the formation of a particular light distribution pattern that increases the visibility of the road ahead of the traveling vehicle.

FIG. 4 is a functional block diagram for explaining a vehicular headlamp system 100 according to the present embodiment. The vehicular headlamp system 100 includes the vehicular headlamp 10 described above, the irradiation control portion 44, a camera 40, and a detection portion 42.

The irradiation control portion 44 controls the irradiation of the vehicular headlamp 10. The irradiation control portion 44 turns the low beam lamp 20L and the high beam lamp 20H of the vehicular headlamp 10 on and off in accordance with instructions from the driver. For example, if there is an instruction from the driver for low beam irradiation, the irradiation control portion 44 turns on the light source bulb 21 of the low beam lamp 20L to irradiate the low beam distribution pattern PL. If there is an instruction from the driver for high beam irradiation, the irradiation control portion 44 turns on the first to third individual light sources 26a to 26c of the high beam lamp 20H in addition to the light source bulb 21 to irradiate the low beam distribution pattern PL and the high beam distribution pattern PH.

FIGS. 5(a) to 5(c) are timing charts for explaining a lighting control of the first to third individual light sources 26a to 26c. In the present embodiment, the irradiation control portion 44 controls each individual light source so as to repeatedly alternate between on and off. Through such a lighting control, the first to third segmented regions PHa to PHc each repeatedly alternate between irradiating and not irradiating.

The irradiation control portion 44 can vary a duty ratio, which is the proportion of lighting time in a flash cycle, for each individual light source. FIGS. 5(a) to 5(c) show an example in which the duty ratio of the first individual light source 26a is 80%, the duty ratio of the second individual light source 26b is 90%, and the duty ratio of the third individual light source 26c is 80%. By varying the duty ratios of the first to third individual light sources 26a to 26c in this manner, the average irradiation intensity of the first to third segmented regions PHa to PHc can be changed. Thus, for example, the irradiation intensity of the second segmented region PHb, which generally requires high luminosity, can be increased while decreasing the irradiation intensity of the first and third segmented regions PHa and PHc, which do not require as high a luminosity. Note that, in the present embodiment, the flash cycle of the individual light source is set to a short cycle that cannot be detected by the human eye.

The camera 40 shown in FIG. 4 is configured so as to operate in association with the irradiation control portion 44. The camera 40 images forward of the own vehicle at a timing when the first to third individual light sources 26a to 26c are all turned on, and at a timing when the first to third individual light sources 26a to 26c are all turned off. FIG. 5 shows that the camera 40 performs imaging at a time t1 and a time t3 when the first to third individual light sources 26a to 26c are all turned off, and at a time t2 when the first to third individual light sources 26a to 26c are all turned on. Such imaging generates an image of forward of the own vehicle when all the first to third segmented regions PHa to PHc are irradiated (called an "irradiation image" below as appropriate), and an image of forward of the own vehicle when none of the first to third segmented regions PHa to PHc are irradiated (called a "non-irradiation image" below as appropriate). The irradiation image and the non-irradiation image imaged by the camera 40 are sent to the detection portion 42.

The detection portion 42 includes a high-luminance part detection portion 46, a light emitting object determination portion 48, a forward vehicle detection portion 50, and an irradiation suppression object detection portion 52.

The high-luminance part detection portion 46 detects a light region (called a "high-luminance part" below as appropriate) having a luminance equal to or greater than a predetermined reference luminance within the irradiation image and the non-irradiation image. The reference luminance is set to a lower level than the luminance of a light region caused by the headlamp of an oncoming vehicle and the tail lamp of a preceding vehicle so as to enable the detection of forward vehicles.

The light emitting object determination portion 48 distinguishes between and detects a light emitting object and a reflective object present ahead of the vehicle by comparing whether the high-luminance part is present in both the irradiation image and the non-irradiation image. As mentioned above, the light emitting object is an object that emits its own light, such as a forward vehicle, and the reflective object is an object that reflects light irradiated from the own vehicle, such as a road sign or a delineator (safety post). Specifically, the light emitting object determination portion 48 determines a high-luminance part present within the non-irradiation image to be a light emitting object, and determines a high-luminance part present within the irradiation image but not within the non-irradiation image to be a reflective object.

During high beam irradiation, road signs and delineators may have a considerably high reflective light intensity. In such cases, it is difficult to determine whether the detected high-luminance part is a light emitting object or a reflective object by imaging the irradiation image alone. If only the non-irradiation image is imaged, although the detected high-luminance part can be determined as a light emitting object, a reflective object cannot be detected. According to the present embodiment, light emitting objects and reflective objects can be distinguished and detected with high accuracy through the use of the irradiation image and the non-irradiation image. Information on light emitting objects and reflective objects thus detected can be utilized for a light distribution control and a vehicle control. For example, the information on light emitting objects can be utilized in the light distribution control described below. Further, the information on reflective objects can be utilized in a vehicle control. For example, the shape of the road can be recognized through the detection of delineators, and used in a control that cautions the driver and automatically decelerates the vehicle.

The forward vehicle detection portion 50 determines, when a light emitting object is detected by the light emitting object determination portion 48, whether the light emitting object is a forward vehicle based on the non-irradiation image. There are various methods that can be used for determining a forward vehicle. For example, if a high-luminance part formed of a pair of red lights or white lights is detected, the light emitting object can be determined to be a forward vehicle.

Information on the forward vehicle detected by the forward vehicle detection portion 50 is sent to the irradiation control portion 44. The irradiation control portion 44 then determines whether the detected forward vehicle is in any of the first to third segmented regions PHa to PHc. During high beam irradiation, if the forward vehicle is in any of the first to third segmented regions PHa to PHc, the irradiation control portion 44 lowers the duty ratio of the corresponding individual light source so as to lower the proportion of irradiation time in the irradiation/non-irradiation cycle of the segmented region where the forward vehicle exists. Thus, the forward visibility of the driver can be secured while reducing the glare for the forward vehicle.

Based on the irradiation image, the irradiation suppression object detection portion 52 detects an irradiation suppression object, which is an object to which light irradiation should be suppressed. The irradiation suppression object may be a pedestrian or a bicycle, for example, that should not be subjected to glare. Pedestrians and bicycles can be detected through the application of a commonly known image recognition technique.

Information on the irradiation suppression object detected by the irradiation suppression object detection portion 52 is sent to the irradiation control portion 44. The irradiation control portion 44 then determines whether the detected irradiation suppression object is in any of the first to third segmented regions PHa to PHc. During high beam irradiation, if the irradiation suppression object is in any of the first to third segmented regions PHa to PHc, the irradiation control portion 44 lowers the duty ratio of the corresponding individual light source so as to lower the proportion of irradiation time in the irradiation/non-irradiation cycle of the segmented region where the irradiation suppression object exists. Thus, the forward visibility of the driver can be secured while reducing the glare for the irradiation suppression object.

The irradiation control portion 44 may calculate an irradiation intensity considered acceptable by the detected irradiation suppression object and an irradiation intensity at which image recognition can be continued, and adjust the duty ratio of the corresponding individual light source such that the segmented region where the irradiation suppression object exists is irradiated at the lower irradiation intensity. In this case, image recognition can be continued while reducing the glare for the irradiation suppression object.

In addition, if the driver perceives flickering as a result of lowering the duty ratio of the individual light source, the irradiation control portion 44 may prevent the generation of such flickering by readjusting the duty ratio. The driver's perception of flickering changes depending on the irradiation intensity, the duty ratio, background illumination, and the like. Therefore, it is possible to determine whether the driver perceives flickering with the application of a predetermined function that uses these as parameters.

The operation of the vehicular headlamp system 100 will be described next using specific examples. FIG. 6 shows a preceding vehicle 600 traveling ahead of the own vehicle. As shown in FIG. 6, a portion of the body of the preceding vehicle 600 is in the second segmented region PHb.

FIGS. 7(a) to 7(c) are timing charts for explaining a control of the first to third individual light sources 26a to 26c and the camera 40 under the circumstances shown in FIG. 6. Under the circumstances shown in FIG. 6, the preceding vehicle 600 is in the second segmented region PHb. Therefore, the irradiation control portion 44 lowers the duty ratio of the second individual light source 26b that irradiates light to the second segmented region PHb from the 90% in FIG. 5 to 10%. The duty ratios of the first individual light source 26a and the third individual light source 26c are 80%, the same as in FIG. 5. Thus, visibility farther outward than the own vehicle lane and the oncoming vehicle lane can be secured while suppressing the glare for the preceding vehicle 600. Note that, in FIGS. 7(a) to 7(c), the timing (time t2) at which the irradiation image is imaged is changed from that in FIG. 5 due to changing the duty ratio of the second individual light source 26b.

FIG. 8 is also a drawing for explaining the operation of the vehicular headlamp system 100. FIG. 8 shows a pedestrian 800 present on the road shoulder ahead of the own vehicle. As shown in FIG. 8, the pedestrian 800 is present on the road shoulder on the oncoming vehicle lane side, and also within the first segmented region PHa.

FIGS. 9(a) to 9(c) are timing charts for explaining a control of the first to third individual light sources 26a to 26c and the camera 40 under the circumstances shown in FIG. 8. Under the circumstances shown in FIG. 8, the pedestrian 800 is in the first segmented region PHa. Therefore, the irradiation control portion 44 lowers the duty ratio of the first individual light source 26a that irradiates light to the first segmented region PHa from the 80% in FIG. 5 to 10%. The duty ratios of the second individual light source 26b and the third individual light source 26c are 90% and 80%, the same as in FIG. 5. Thus, visibility farther outward than the own vehicle lane and the oncoming vehicle lane can be secured while suppressing the glare for the pedestrian 800. In the present embodiment, because the first individual light source 26a is not completely turned off, the pedestrian 800 can be detected from the irradiation image.

FIG. 10 is a timing chart for explaining a control of the first to third individual light sources according to another embodiment of the present invention. In the embodiment described above, the irradiation control portion 44 controlled the vehicular headlamp 10 so as to repeatedly alternate between irradiating and not irradiating light to all the segmented regions. However, the irradiation control portion 44 may control the vehicular headlamp 10 so as to repeatedly alternate between irradiating and not irradiating light to at least one segmented region. For example, the irradiation control portion 44 may control the vehicular headlamp 10 so as to repeatedly alternate between irradiating and reflecting light to the second segmented region PHb that is irradiated with light of a predetermined intensity or higher, and continuously irradiating light to the first segmented region PHa and the third segmented region PHc.

In FIG. 10, a configuration is adopted wherein only the second individual light source 26b that corresponds to the second segmented region PHb is duty controlled, and the first individual light source 26a and the third individual light source 26c that respectively correspond to the first segmented region PHa and the third segmented region PHc are continuously lit. Forward of the own vehicle is imaged when the second individual light source 26b is on and when it is off. Various processing with respect to the irradiation image and the non-irradiation image are the same as in the above embodiment. In this case, light emitting objects and reflective objects inside the second segmented region PHb can be distinguished and detected.

The high beam distribution pattern PH is ordinarily set such that the highest irradiation intensity is in the vicinity of the point H-V. In other words, in the present embodiment, the irradiation intensity is set highest in the second segmented region PHb, and the irradiation intensity of the first segmented region PHa and the third segmented region PHc is set relatively low. Repeatedly alternating between irradiation and non-irradiation to a segmented region with low irradiation intensity may even further reduce the irradiation intensity of the segmented region. Hence, by repeatedly alternating between irradiation and non-irradiation for only the second segmented region PHb having a high irradiation intensity and continuously lighting the first and third segmented regions PHa, PHc having a low irradiation intensity as in the present embodiment, it is possible to suppress lowering of the irradiation intensity of the vehicular headlamp 10 overall. In addition, by suppressing a decrease in irradiation intensity through continuous irradiation of the first segmented region PHa and the third segmented region PHc, pedestrians on the road shoulder can be more suitably detected.

The present invention was described above based on embodiments. These embodiments are merely examples; a person skilled in the art will recognize that various modifications may be made to the combinations of structural elements and processing processes, and that such modifications are also within the scope of the present invention.

The above embodiments illustrate examples in which the high beam distribution pattern PH is divided into three segmented regions; however, the number of segmented regions is not limited to three.

### [Description of the Reference Numerals]

- PHa: FIRST SEGMENTED REGION
- PHb: SECOND SEGMENTED REGION
- PHc: THIRD SEGMENTED REGION
- 10: VEHICULAR HEADLAMP
- 20L: LOW BEAM LAMP
- 20H: HIGH BEAM LAMP
- 21: LIGHT SOURCE BULB
- 26a: FIRST INDIVIDUAL LIGHT SOURCE
- 26b: SECOND INDIVIDUAL LIGHT SOURCE
- 26c: THIRD INDIVIDUAL LIGHT SOURCE
- 40: CAMERA
- 42: DETECTION PORTION
- 44: IRRADIATION CONTROL PORTION
- 46: HIGH-LUMINANCE PART DETECTION PORTION
- 48: LIGHT EMITTING OBJECT DETERMINATION PORTION
- 50: FORWARD VEHICLE DETECTION PORTION
- 52: IRRADIATION SUPPRESSION OBJECT DETECTION PORTION
- 100: VEHICULAR HEADLAMP SYSTEM
- 600: PRECEDING VEHICLE
- 800: PEDESTRIAN

## Claims

1. A vehicular headlamp system, **characterized by** comprising:
a vehicular headlamp that can independently irradiate each of a plurality of segmented regions that divide a light distribution region forward of an own vehicle;
irradiation control means that controls the vehicular headlamp so as to repeatedly alternate between irradiating and not irradiating light to at least one segmented region;
imaging means that respectively images forward of the own vehicle during irradiation and non-irradiation of the at least one segmented region, and generates an irradiation image and a non-irradiation image; and
detection means that detects a high-luminance part within the irradiation image and the non-irradiation image, and distinguishes between and detects a light emitting object and a reflective object present ahead of the vehicle by comparing whether the high-luminance part is present in both images.

2. The vehicular headlamp system according to claim 1, **characterized in that**
the detection means determines a high-luminance part present within the non-irradiation image to be a light emitting object, and determines a high-luminance part present within the irradiation image but not within the non-irradiation image to be a reflective object.

3. The vehicular headlamp system according to claim 1 or 2, **characterized in that**
the detection means determines whether the light emitting object is a forward vehicle based on the non-irradiation image, and
the irradiation control means, if the detection means determines that the light emitting object is a forward vehicle, controls the vehicular headlamp so as to lower a proportion of irradiation time of light to the at least one segmented region.

4. The vehicular headlamp system according to any one of claims 1 to 3, **characterized in that**
the detection means detects an irradiation suppression object to which light irradiation should be suppressed based on the irradiation image, and
the irradiation control means, if the detection means detects the irradiation suppression object, controls the vehicular headlamp so as to lower a proportion of irradiation time of light to the at least one segmented region.

5. The vehicular headlamp system according to any one of claims 1 to 4, **characterized in that**
the irradiation control means controls the vehicular headlamp so as to repeatedly alternate between irradiating and not irradiating light to a segmented region that is irradiated with light of a predetermined intensity or higher, and continuously irradiate light to other segmented regions.
